# EUROPÄISCHE PATENTSCHRIFT

(11) **EP 3 562 890 B1**
(45) Veröffentlichungstag und Bekanntmachung des Hinweises auf die Patenterteilung: **20.05.2020**
(21) Anmeldenummer: 17714431.8
(22) Anmeldetag: 29.03.2017
(51) Int. Cl.: C08L 83/08

(54) **SILICONELASTOMER MIT FLUORIERTEN SEITENGRUPPEN**
SILICONE ELASTOMER HAVING FLUORINATED SIDE GROUPS
ÉLASTOMÈRE DE SILICONE COMPORTANT DES GROUPES LATÉRAUX FLUORÉS

(43) Veröffentlichungstag der Anmeldung: 06.11.2019
(73) Patentinhaber: Wacker Chemie AG, 81737 München (DE)
(72) Erfinder: KÖLLNBERGER, Andreas, 84375 Kirchdorf (DE); BAUER, Michael, 84561 Mehring (DE); PILZWEGER, Erich, 84387 Julbach (DE)
(74) Vertreter: Mieskes, Klaus Theoderich
(86) Internationale Anmeldenummer: PCT/EP2017/057455
(87) Internationale Veröffentlichungsnummer: WO 2018/177523

(56) Entgegenhaltungen:
- US-A- 5 239 035

## Beschreibung

Die vorliegende Erfindung betrifft niedrigviskose Siliconzusammensetzungen, welche α,ω-Si-Vinyl-Copolymere, α,ω-Si-H funktionelle Copolymere und 3,3,3-trifluorpropylmethylsiloxyhaltige Si-H-Vernetzer enthalten, wobei die Copolymere hauptsächlich aus 3,3,3-Trifluorpropylmethylsiloxy- und Dimethylsiloxyeinheiten aufgebaut sind, sowie die Herstellung dünner Schichten aus diesen Siliconzusammensetzungen, wobei die Schichten eine erhöhte elektrische Permittivität, im Vergleich zu Schichten aus Standardsiliconen zeigen.

### Stand der Technik

In EP2931792A1 wird ein Verfahren zur Herstellung von Siliconfolien und deren Verwendung als dielektrische, elektroaktive Polymere (EAP) in Aktoren, Sensoren oder Generatoren offenbart. Besonders bei Anwendungen der EAPs im Bereich der Aktoren oder der Generatoren werden im Verlauf der Lebensdauer mehrere Millionen Schwingungszyklen durchlaufen, so dass diese Siliconfolien auf Grund ihrer sehr hohen Dauerbelastungsbeständigkeit, ihrer Gleichmäßigkeit und Partikelfreiheit prinzipiell ein gut geeignetes Dielektrikum für diese Anwendung darstellen. Die in EP2931792A1 zur Herstellung der Siliconfolien verwendeten Siliconzusammensetzungen führen jedoch zu einer unzureichenden Permittivität. Dies beschränkt die Empfindlichkeit im Sensorbereich, im Aktuatorbereich führt es zu Beschränkungen in der Betriebsspannung und im Generatorbereich zu Beschränkungen in deren Effizienz und somit in deren Wirkungsgrad.

Im Stand der Technik ist bekannt, dass sich die dielektrischen Eigenschaften von Siliconzusammensetzungen beeinflussen lassen, wenn eine Modifizierung über polare Seitengruppen erfolgt, Beispielsweise beschreibt EP0927425B1 Siliconzusammensetzungen mit fluorhaltigen Seitengruppen - bevorzugt Trifluorpropyl für die Verwendung als Kabelummantelung in Medizinprodukten. Ein Nachteil der daraus erhaltenen Polymere, welche einen hohen Polymerisationsgrad aufweisen sollen (3500-6500), ist die hohe Viskosität, weshalb sie auf einer Walze verarbeitet werden müssen. Derartige Siliconzusammensetzungen eignen sich daher nicht für die Herstellung dünner Schichten.

EP0676450B1 beansprucht thixotrope Fluorsilicongelzusammensetzungen, welche niedrigviskose, teil-vinylendständige Polymere enthalten. Das bedeutet, dass die Endgruppen der verwendeten Vinylpolymere den Beispielen zufolge etwa 40-50 % aus unfunktionellen Trimethylsilyleinheiten bestehen, welche nicht an der Vernetzungsreaktion teilnehmen. Dadurch entstehen sog. "dangling ends", welche für die Erreichung eines niedrigmoduligen Silicongels von Vorteil sind. Für dünne Schichten ist das Vorhandensein loser Enden aber von großem Nachteil, da diese einen negativen Einfluss auf das Rückstellverhalten, sprich den mechanischen Verlustfaktor, haben.

EP0773251B1 befasst sich mit der Herstellung hochviskoser fluorierter Polydiorganosiloxanzusammensetzungen ausgehend von OHterminierten Polymeren. Mit dem hier beschriebenen Viskositätsbereich der Siliconzusammensetzungen können jedoch keine dünnen Schichten erzeugt werden.

EP0688828B1 beansprucht lösungsmittelbeständige Silicongele auf der Basis von Fluorosiloxanen. Dabei sind im Vinylpolymer Verzweigungsstellen, sog. T-Einheiten, eingebaut, welche seitenständig Vinyldimethylsiloxygruppen tragen, die mittels platinkatalysierter Additionsvernetzung mit einem Si-H-Vernetzer zur Reaktion gebracht werden. Das in EP0688828B1 offenbarte Silicongel hat jedoch deutlich zu geringe mechanische Festigkeit für die Herstellung von dünnen Schichten.

In EP0808876B1 wird eine Mischung aus Alkylwasserstoffsiloxan und Dialkylwasserstoffsiloxy(perfluoralkylethyl)siloxan benutzt, um die Vernetzungscharakteristik zu modifizieren. Aber auch die hier beschriebenen Siliconzusammensetzungen zeigen Viskositäten vor der Vernetzungsreaktion die für die Herstellung von dünnen Schichten ungeeignet sind.

US 5239035 A offenbart eine Zusammensetzung auf Basis von einem Dimethylvinylsiloxy-terminierten Poly(Methyl-3,3,3-Trifluorpropyl)siloxan, einem Dimethylwasserstoffsiloxy-terminierten Poly(Methyl-3,3,3-Trifluorpropyl)siloxan und einem Organohydridsiloxan mit drei Si-H-Gruppen sowie 3,3,3-Trifluorpropyl-Gruppen. Die Zusammensetzungen finden Anwendungen in dem Elektronikbereich.

Bisher sind im Bereich HTV/HCR (High Temperature Vulcanizing/High Consistency Rubber), im Bereich LSR (Liquid Silicone Rubber) und RTV-2 (Raumtemperaturvernetzend, zweikomponentig) Fluorosiliconmassen auf dem Markt. Silicone im Bereich HTV besitzen eine sehr hohe Viskosität, die unvernetzten Bestandteile sind standfest, plastisch. LSR-Silicone werden üblicherweise in hochautomatischen Spritzgussprozessen eingesetzt. Die dynamischen Viskositäten bei 25°C und einer Scherrate von 1 s⁻¹ liegen im Bereich zwischen 1.000.000 und 1.500.0000 mPa·s, was für die Herstellung dünner Schichten deutlich zu hoch ist. Die Materialien sind stark scherverdünnend. Beispielhaft sei auf die Tabelle "*Typical Properties*", auf Seite 2 der Broschüre "*Silastic*® *Fluoro-Liquid Silicone Rubber (F-LSR)"* aus der Reihe *"Automotive Solutions"* der Fa. Dow Corning, von 2013, mit der Form No. 45-1569-01 verwiesen, die den Zusammenhang zwischen den hohen Viskositäten und den mechanischen Eigenschaften verdeutlicht.

Im Bereich der RTV-Silicone sind Fluorosilicone auf dem Markt, welche als Gel eingesetzt werden. Bei Gelen, deren unvernetzte Ausgangsstoffe eine niedrige dynamische Viskosität aufweisen, liegt der Fokus nicht auf mechanischen Festigkeiten, weshalb keine Testwerte angegeben werden. Andere niedrigviskose Fluorosilicone mit der Bezeichnung *"FER-7061-A*/*B"* und *"FER-7110-A*/*B"* werden beispielsweise in der Tabelle auf Seite 22 in der Broschüre *"RTV Silicone Rubber for Electrical & Electronic Applications"* der Firma Shin-Etsu, von Sep. 2016 beschrieben.

### Aufgabe der Erfindung

Aufgabe war daher die Bereitstellung von modifizierten Siliconzusammensetzungen die eine geeignete niedrige Viskosität aufweisen, um daraus dünne Schichten in einem breiten Bereich von 0,1 bis 500 µm herzustellen, die weiterhin eine gute Gleichmäßigkeit in der Schichtdicke aufweisen, und diese Schichten nach Härtung eine verbesserte Permittivität und gleichzeitig gute oder sogar verbesserte mechanische Eigenschaften zeigen.

Diese Aufgabe wird überraschenderweise von den erfindungsgemäßen Siliconzusammensetzungen gelöst.

Mit der hier vorliegenden Erfindung wurde überraschenderweise gefunden, dass eine Kombination von α,ω-Si-Vinyl-Copolymeren, α,ω-Si-H funktionellen Copolymeren und 3,3,3-trifluorpropylmethylsiloxyhaltigen Si-H-Kammvernetzern mit mindestens 3 Si-H-Funktionen pro Molekül die Vorteile niedriger Ausgangsviskosität der Polymere mit guten mechanischen Eigenschaften des vernetzten Elastomerprodukts vereint, wobei die Copolymere hauptsächlich aus 3,3,3-Trifluorpropylmethylsiloxy- und Dimethylsiloxyeinheiten aufgebaut sind. Zudem können aufgrund der niedrigen Ausgangsviskositäten dünne Schichten mit Hilfe üblicher Technologien wie Rakelbeschichtung, Düsenbeschichtung oder Rollenbeschichtung hergestellt werden. Darüber hinaus kann das Material auch für den 3D-Druck verwendet werden.

Ebenfalls überraschend wurde gefunden, dass die erfindungsgemäßen Siliconzusammensetzungen löslich sind in organischen Lösungsmitteln und niedermolekularen Polydimethylsiloxanen, sofern der Gehalt an 3,3,3-Trifluorpropylmethylsiloxy-Einheiten 40 mol% nicht übersteigt.

Gegenstand der vorliegenden Erfindung sind daher härtbare Siliconzusammensetzungen enthaltend,
(A) 20 - 70 Gew.% mindestens eines Polyorganosiloxans mit einer dynamischen Viskosität von 50 - 100.000 mPa·s (bei 25°C und einer Scherrate d = 1 s⁻¹), und mit mindestens zwei Resten pro Molekül mit aliphatischen Kohlenstoff-Kohlenstoff-Mehrfachbindungen, welches noch mindestens 5 Mol% 3,3,3-Trifluorpropylmethylsiloxy oder mindestens 5 Mol% Bis(3,3,3-Trifluorpropyl)siloxy-Einheiten oder mindestens 5 Mol% einer Mischung aus beiden aufweist,
(B) 10 - 70 Gew.% mindestens eines linearen α,ω-Si-H funktionellen Polyorganosiloxans mit einer dynamischen Viskosität von 50 - 100.000 mPa·s (bei 25°C und einer Scherrate d = 1 s⁻¹), welches noch mindestens 5 Mol% 3,3,3-Trifluorpropylmethylsiloxy oder mindestens 5 Mol% Bis(3,3,3-Trifluorpropyl)siloxy-Einheiten oder mindestens 5 Mol% einer Mischung aus beiden aufweist,
(C) 0,1 - 50 Gew.% mindestens einer siliciumorganischer Verbindung, welche mindestens 3 an Silicium gebundene Wasserstoffatome pro Molekül enthalten, welches noch mindestens 2,5 Mol% 3,3,3-Trifluorpropylmethylsiloxy- oder mindestens 2,5 Mol% Bis(3,3,3-Trifluorpropyl)siloxy-Einheiten aufweisen oder mindestens 2,5 Mol% einer Mischung aus beiden,
(D) 1 - 40 Gew.% verstärkender Füllstoff mit einer spezifischen BET-Oberfläche von mindestens 50 m²/g
(E) mindestens einen Hydrosilylierungskatalysator,
wobei die Mengen stets so gewählt werden, dass sie insgesamt 100 Gew.% betragen.

### Komponente (A)

Die Zusammensetzung des **Polyorganosiloxans (A)** entspricht vorzugsweise der durchschnittlichen allgemeinen Formel (1)

R¹ₓR²_{y}SiO_{(4-x-y)/2} (1)

worin
R¹ unabhängig voneinander einwertige, gegebenenfalls halogen- oder cyanosubstituierte, gegebenenfalls über eine organische zweiwertige Gruppe an Silicium gebundene C₁-C₁₀-Kohlenwasserstoffreste, die aliphatische Kohlenstoff-Kohlenstoff-Mehrfachbindungen enthalten,
R² unabhängig voneinander einwertige, gegebenenfalls halogen- oder cyanosubstituierte, über SiC-gebundene C₁-C₁₀-Kohlenwasserstoffreste, die frei sind von aliphatischen Kohlenstoff-Kohlenstoff Mehrfachbindungen, mit der Maßgabe, dass als R² mindestens 5 Mol% 3,3,3-Trifluorpropylmethylsiloxy- oder mindestens 5 Mol% Bis(3,3,3-Trifluorpropyl)siloxy-Einheiten oder mindestens 5 Mol% einer Mischung aus beiden im Polyorganosiloxan (A) enthalten sind,
x eine solche nichtnegative Zahl mit der Maßgabe, dass mindestens zwei Reste R¹ in jedem Molekül vorhanden sind, und
y eine nicht negative Zahl mit der Maßgabe, dass die Summe (x+y) kleiner gleich 3, besonders bevorzugt im Bereich von 1,8 bis 2,5 liegt,
bedeuten.

Bei der Alkylengruppe R¹ kann es sich um beliebige, einer Anlagerungsreaktion (Hydrosilylierung) mit einer SiH-funktionellen Verbindung zugängliche Gruppen handeln. Falls es sich bei Rest R¹ um SiC-gebundene, substituierte Kohlenwasserstoffreste handelt, sind als Substituenten Halogenatome, Cyanoreste und -OR³ bevorzugt. Dabei bedeuten R³ unabhängig voneinander, gleich oder verschieden ein Wasserstoffatom oder einen einwertigen Kohlenwasserstoffrest mit 1 bis 20 Kohlenstoffatomen.

Bevorzugt handelt es sich bei Rest R¹ um Alkenyl- und Alkinylgruppen mit 2 bis 16 Kohlenstoffatomen, wie Vinyl-, Allyl-, Methallyl-, 1-Propenyl-, 5-Hexenyl-, Ethinyl-, Butadienyl-, Hexadienyl-, Cyclopentenyl-, Cyclopentadienyl-, Cyclohexenyl-, Vinylcyclohexylethyl-, Divinylcyclohexylethyl-, Norbornenyl-, Vinylphenyl- und Styrylreste, wobei Vinyl-, Allyl- und Hexenylreste besonders bevorzugt verwendet werden. Die bevorzugten Reste R¹ können in jeder Position der Polymerkette, insbesondere an den endständigen Siliciumatomen gebunden sein.

Beispiele R² sind die einwertigen Reste -F, -Cl, -Br, OR³, -CN, - SCN, -NCO und SiC-gebundene, substituierte oder nicht substituierte Kohlenwasserstoffreste, die mit Sauerstoffatomen oder der Gruppe -C(O)- unterbrochen sein können, sowie zweiwertige, beidseitig Si-gebundene Reste. Falls es sich bei Rest R² um SiC-gebundene, substituierte Kohlenwasserstoffreste handelt, sind bevorzugte Substituenten Halogenatome, phosphorhaltige Reste, Cyanoreste, -OR³, -NR³⁻, -NR³₂, -NR³-C(O)-NR³₂, -C(O)-NR³₂, -C(O)R³, -C(O)OR³, -SO₂-Ph und -C₆F₅; wobei R³ die oben dafür angegebene Bedeutung entspricht und Ph der Phenylrest bedeutet.

Weitere Beispiele für Reste R² sind Alkylreste, wie der Methyl-, Ethyl-, n-Propyl-, iso-Propyl-, n-Butyl-, iso-Butyl-, tert-Butyl-, n-Pentyl-, iso-Pentyl-, neo-Pentyl-, tert-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, und Octadecylreste, wie der n-Octadecylrest, Cycloalkylreste, wie Cyclopentyl-, Cyclohexyl-, Cycloheptyl- und Methylcyclohexylreste, Arylreste, wie der Phenyl-, Naphthyl-, Anthryl- und Phenanthrylrest, Alkarylreste, wie o-, m-, p-Tolylreste, Xylylreste und Ethylphenylreste, und Aralkylreste, wie der Benzylrest, der α- und der β-Phenylethylrest,

Beispiele für substituierte Reste R² sind Halogenalkylreste, wie der 3,3,3-Trifluor-n-propylrest, der 2,2,2,2',2',2'-Hexafluorisopropylrest, der Heptafluorisopropylrest, Halogenarylreste, wie der o-, m- und p-Chlorphenylrest, - (CH₂)-N(R³)C(O)NR³₂, -(CH₂)ₙ-C(O)NR³, -(CH₂)ₒ-C(O)R³, -(CH₂)ₒ-C(O)C)R³, -(CH₂)ₒ-C(O)NR³₂, -(CH₂)-C(O)-(CH₂)ₚC(O)CH₃, -(CH₂)-O-CO-R³, -(CH₂)-NR³-(CH₂)ₚ-NR³₂, -(CH₂)ₒ-O-(CH₂)ₚCH(OH)CH₂OH, -(CH₂)ₒ(OCH₂CH₂)ₚOR³, -(CH₂)ₒ-SO₂-Ph und -(CH₂)ₒ-O-C₆F₅, wobei R³ die oben dafür angegebene Bedeutung entspricht, Ph der Phenylrest bedeuten und o und p gleiche oder verschiedene ganze Zahlen zwischen 0 und 10 bedeuten.

Beispiele für R² gleich zweiwertige, beidseitig Si-gebundene Reste sind solche, die sich von den voranstehend für Rest R² genannten einwertigen Beispiele dadurch ableiten, dass eine zusätzliche Bindung durch Substitution eines Wasserstoffatoms erfolgt, Beispiele für derartige Reste sind -(CH₂)-, -CH(CH₃)-, -C(CH₃)₂-, - CH(CH₃)-CH₂-, -C₆H₄-, -CH(Ph)-CH₂-, -C(CF₃)₂-, -(CH₂)ₒ-C₆H₄-(CH₂)ₒ-,-(CH₂)ₒ-C₆H₄-C₆H₄-(CH₂)ₒ-, -(CH₂O)ₚ, (CH₂CH₂O)ₒ, -(CH₂)ₒ-O_{z}-C₆H₄-SO₂-C₆H₄-O_{z}-(CH₂)ₒ-, wobei z = 0 oder 1 ist, und Ph, o und p die voranstehend genannte Bedeutung haben.

Bevorzugt handelt es sich bei Rest R² um einen einwertigen, von aliphatischen Kohlenstoff-Kohlenstoff-Mehrfachbindungen freien, SiC-gebundenen, gegebenenfalls substituierten Kohlenwasserstoffrest mit 1 bis 18 Kohlenstoffatomen, besonders bevorzugt um einen einwertigen, von aliphatischen Kohlenstoff-Kohlenstoff-Mehrfachbindungen freien, SiC-gebundenen Kohlenwasserstoffrest mit 1 bis 6 Kohlenstoffatomen, insbesondere um den Methyl- oder 3,3,3-Trifluor-n-propylrest.

Das Molekulargewicht des Bestandteils (A) kann in weiten Grenzen variieren, etwa zwischen 10² und 10⁵ g/mol. So kann es sich bei dem Bestandteil (A) beispielsweise um ein relativ niedermolekulares alkenylfunktionelles Oligosiloxan, wie 1,2-Divinyl-3,3,3-trifluorpropyltrimethyldisiloxan, handeln, jedoch auch um ein über kettenständige oder endständige Si-gebundene Vinylgruppen verfügendes hochpolymeres Polydimethylsiloxan, z.B. mit einem Molekulargewicht von 10⁵ g/mol (mittels NMR bestimmtes Zahlenmittel). Auch die Struktur der den Bestandteil (A) bildenden Moleküle ist nicht festgelegt; insbesondere kann die Struktur eines höhermolekularen, also oligomeren oder polymeren Siloxans linear, cyclisch, verzweigt oder auch harzartig, netzwerkartig sein. Lineare und cyclische Polysiloxane sind vorzugsweise aus Einheiten der Formel R²₃SiO_{1/2}, R¹R²₂SiO_{1/2}, R¹R²SiO_{1/2} und R²₂SiO_{2/2} zusammengesetzt, wobei R² und R¹ die vorstehend angegebene Bedeutung haben. Verzweigte und netzwerkartige Polysiloxane enthalten zusätzlich trifunktionelle und/oder tetrafunktionelle Einheiten, wobei solche der Formeln R²SiO_{3/2}, R¹SiO_{3/2} und SiO_{4/2} bevorzugt sind, wobei R² und R¹ die vorstehend angegebene Bedeutung haben. Selbstverständlich können auch Mischungen unterschiedlicher, den Kriterien des Bestandteils (A) genügender Siloxane eingesetzt werden.

Bevorzugt weist die Komponente (A) dynamische Viskositäten von 50, bevorzugt 500 bis 20.000 mPa•s, jeweils bei 25°C und einer Scherrate von d=1s⁻¹ auf. Besonders bevorzugt als Komponente (A) ist die Verwendung vinylfunktioneller, im wesentlichen linearer Polydiorganosiloxane mit einer dynamischen Viskosität von 50 bis 100.000 mPa•s, besonders bevorzugt von 500 bis 20.000 mPa•s, jeweils bei 25°C und einer Scherrate von d=1s⁻¹.
(A) wird in Mengen von 20 - 70 Gew.%, bevorzugt 25 - 65 Gew.% und besonders bevorzugt von 30 - 60 Gew.% eingesetzt.

### Komponente (B)

Als **Komponente (B)** wird ein lineares Polyorganosiloxan eingesetzt, welches Si-gebundene Wasserstoffatome enthält und welches in der Lage ist, kettenverlängernd zu wirken. Diese Eigenschaft wird üblicherweise dadurch erreicht, dass (B) ein α,ω-Si-H funktionelles Polydimethylsiloxan der allgemeinen Formel (2)ist,

R²_{c}H_{d}SiO_{(4-c-d)/2} (2)

wobei
- **R²**: die oben angegebene Bedeutung hat,
- **c**: zwischen 1 und 3 ist und
- **d**: zwischen 0,001 und 2 ist,
mit der Maßgabe, dass die Summe von c + d kleiner oder gleich 3 ist und höchstens zwei Si gebundene Wasserstoffatome je Molekül vorliegen.

Vorzugsweise enthält das erfindungsgemäß eingesetzte Organopolysiloxan (B) Si-gebundenen Wasserstoff im Bereich von 0,001 bis 1,7 Gewichtsprozent, bezogen auf das Gesamtgewicht des Organopolysiloxans (B).

Das Molekulargewicht des Bestandteils (B) kann ebenfalls in weiten Grenzen variieren, etwa zwischen 10² und 10⁵ g/mol. So kann es sich bei dem Bestandteil (B) beispielsweise um ein relativ niedermolekulares SiH-funktionelles Oligosiloxan, wie z.B. 1,1,3-trimethyl-3-(3,3,3-trifluoropropyl)disiloxan, handeln, jedoch auch um ein lineares über endständige SiH-Gruppen verfügendes oligomeres oder polymeres oder hochpolymeres Polydimethylsiloxan. Lineare (B) sind vorzugsweise aus Einheiten der Formel R²₃SiO_{1/2}, HR²₂SiO_{1/2}, HR²SiO_{2/2} und R²₂SiO_{2/2} zusammengesetzt, wobei R² die vorstehend angegebene Bedeutung hat.

Selbstverständlich können auch Mischungen unterschiedlicher, den Kriterien des Bestandteils (B) genügender Siloxane eingesetzt werden. Besonders bevorzugt ist die Verwendung niedermolekularer SiH-funktioneller Verbindungen wie Tetrakis(dimethylsiloxy)silan und Tetramethylcyclotetrasiloxan, sowie höhermolekularer, SiHhaltiger Siloxane, wie Poly(hydrogenmethyl)siloxan und Poly(dimethylhydrogenmethyl)siloxan mit einer Viskosität bei 25°C von 10 bis 100 000 mPa•s bei einer Scherrate von d = 1 s⁻¹, wobei mindestens 5 Mol% der Ketteneinheiten mindestens eine 3,3,3-Trifluorpropylgruppe enthalten. Besonders bevorzugt ist der Viskositätsbereich von 10 bis 20.000 mPa•s (25°C, d = 1 s⁻¹).

Bestandteil (B) ist vorzugsweise in einer solchen Menge in den erfindungsgemäßen vernetzbaren Siliconzusammensetzungen enthalten, dass das Molverhältnis von SiH-Gruppen aus der Komponente (B) zu aliphatisch ungesättigten Gruppen aus (A) bei 0,1 bis 1, besonders bevorzugt zwischen 0,3 und 0,9 liegt.
(B) wird in Mengen von 10 - 70 Gew.%, bevorzugt 20 bis 50 Gew.% eingesetzt.

### Komponente (C)

Als **Komponente (C)** werden Organosiliziumverbindungen eingesetzt, die mindestens 3 Si-gebundene Wasserstoffatome aufweisen. Bevorzugt werden lineare, cyclische oder verzweigte Organopolysiloxane aus Einheiten der allgemeinen Formel (3)

R²ₑH_{f}SiO_{(4-e-f)/2} (3)

eingesetzt, wobei
**R²** die oben angegebene Bedeutung hat, mit dem Unterschied, dass als R² mindestens 2,5 Mol% 3,3,3-Trifluorpropylmethylsiloxy- oder mindestens 2,5 Mol% Bis(3,3,3-Trifluorpropyl)siloxy-Einheiten oder mindestens 2,5 Mol% einer Mischung aus beiden in der Komponente (C) enthalten sind,
**e** zwischen 0 und 3 ist und
**f** zwischen 0 und 2 ist,
mit der Maßgabe, dass die Summe von e + f kleiner oder gleich 3 ist und mindestens drei Si gebundene Wasserstoffatome je Molekül vorliegen.

Vorzugsweise enthält das erfindungsgemäß eingesetzte Organopolysiloxan (C) Si-gebundenen Wasserstoff im Bereich von 0,04 bis 1,7 Gewichtsprozent, bezogen auf das Gesamtgewicht des Organopolysiloxans (C).

Das Molekulargewicht des Bestandteils (C) kann ebenfalls in weiten Grenzen variieren, etwa zwischen 10² und 10⁵ g/mol. So kann es sich bei dem Bestandteil (C) beispielsweise um ein relativ niedermolekulares SiH-funktionelles Oligosiloxan, 1,1,5,5-tetramethyl-3-(3,3,3-trifluoropropyl)trisiloxan handeln, jedoch auch um ein über kettenständig und gegebenenfalls endständig SiH-Gruppen verfügendes hochpolymeres Polydimethylsiloxan oder ein SiH-Gruppen aufweisendes Siliconharz.

Auch die Struktur der den Bestandteil (C) bildenden Moleküle ist nicht festgelegt; insbesondere kann die Struktur eines höhermolekularen, also oligomeren oder polymeren SiH-haltigen Siloxans linear, cyclisch, verzweigt oder auch harzartig, netzwerkartig sein. Lineare und cyclische Polysiloxane (C) sind vorzugsweise aus Einheiten der Formel R²₃SiO_{1/2}, HR²₂SiO_{1/2}, HR²SiO_{2/2} und R²₂SiO_{2/2} zusammengesetzt, wobei R² die vorstehend angegebene Bedeutung hat. Verzweigte und netzwerkartige Polysiloxane enthalten zusätzlich trifunktionelle und/oder tetrafunktionelle Einheiten, wobei solche der Formeln R²SiO_{3/2}, HSiO_{3/2} und SiO_{4/2} bevorzugt sind, wobei R² die vorstehend angegebene Bedeutung hat.

Selbstverständlich können auch Mischungen unterschiedlicher, den Kriterien des Bestandteils (C) genügender Siloxane eingesetzt werden. Besonders bevorzugt ist die Verwendung niedermolekularer SiH-funktioneller Verbindungen wie Tetrakis(dimethylsiloxy)silan und Tetramethylcyclotetrasiloxan, sowie höhermolekularer, SiHhaltiger Siloxane, wie Poly(hydrogenmethyl)siloxan und Poly(dimethylhydrogenmethyl)siloxan mit einer Viskosität bei 25°C von 10 bis 20 000 mPa•s bei einer Scherrate von d = 1 s⁻¹, wobei mindestens 2,5 Mol% der Ketteneinheiten mindestens eine 3,3,3-Trifluorpropylgruppe enthalten. Besonders bevorzugt ist der Viskositätsbereich von 50 bis 1000 mPa•s (25 °C, d = 1 s⁻¹).

Bestandteil (C) ist vorzugsweise in einer solchen Menge in den erfindungsgemäßen vernetzbaren Siliconzusammensetzungen enthalten, dass das Molverhältnis von SiH-Gruppen (Summe Si-H aus Komponente (B) und Komponente (C)) zu aliphatisch ungesättigten Gruppen aus (A) bei 0,5 bis 20, bevorzugt zwischen 0,6 und 5,0 und besonders bevorzugt zwischen 0,8 und 2,5 liegt.
(C) wird in Mengen von 0,1 - 50 Gew.%, bevorzugt zwischen 0,5 und 30 Gew.%, besonders bevorzugt zwischen 1 und 10 Gew.% eingesetzt.

Bei der Reaktion von (A) mit (B) und (C) werden bevorzugterweise entweder 3,3,3-Trifluorpropylmethylsiloxy-Einheiten oder Bis-(3,3,3-trifluorpropyl)siloxy-Einheiten im PDMS eingebaut. Dabei kann die Verteilung statistisch sein, oder als Blöcke (BlockCopolymere). Der Anteil der 3,3,3-Trifluorpropylgruppen in Mol% ist für die gewünschten Effekte der erfindungsgemäßen Zusammensetzungen verantwortlich. Die Zunahme der elektrischen Permittivität im Vergleich zu PDMS ist nicht linear, weshalb bevorzugt ein maximaler Anteil von 50 Mol% ausreichend ist, um den gewünschten Effekt zu erzielen. Der Gehalt an 3,3,3-Trifluorpropylmethylsiloxygruppen oder an Bis(3,3,3-trifluorpropyl)siloxygruppen in den verwendeten Polymeren liegt bei (A) und (B) bei mindestens 5 Mol % und bei (C) bei mindestens 2,5 Mol%, bevorzugt jeweils zwischen 10 Mol% und 80 Mol% und besonders bevorzugt zwischen 20 Mol% und 50 Mol%.

Die elektrische Permittivität gemessen bei 50 Hz steigt bei der Modifizierung von etwa 2,8 für PDMS auf 6,0 für eine 40 Mol%ige Formulierung der Polymere an. Höhere Modifizierungsgrade lassen die Permittivität auf ungefähr 7,0 ansteigen.

Die erfindungsgemäß eingesetzten Komponenten (A), (B) und (C) sind dem Fachmann bekannte handelsübliche Produkte bzw. kann er nach in der Chemie gängigen Verfahren herstellen.

### Komponente (D)

**Komponente (D)** stellt die Gruppe der verstärkenden Füllstoffe dar, die auch bisher zur Herstellung von additionsvernetzbaren Zusammensetzungen eingesetzt wurden. Beispiele für verstärkende Füllstoffe, die als Komponente in den erfindungsgemäßen Siliconzusammensetzungen eingesetzt werden können, sind pyrogene oder gefällte Kieselsäuren mit BET-Oberflächen von mindestens 50 m²/g sowie Ruße und Aktivkohlen wie Furnace-Ruß und Acetylen-Ruß, wobei pyrogene und gefällte Kieselsäuren mit BET-Oberflächen von mindestens 50 m²/g und höchstens 300 m²/g bevorzugt sind. Besonders bevorzugt sind BET-Oberflächen zwischen 75 und 200 m²/g. Die genannten Kieselsäurefüllstoffe können hydrophilen Charakter haben oder nach bekannten Verfahren hydrophobiert sein. Der Gehalt der erfindungsgemäßen vernetzbaren Zusammensetzung an aktiv verstärkendem Füllstoff liegt im Bereich von 1 bis 40 Gew.%, vorzugsweise bei 5 bis 35 Gew.% und besonders bevorzugt zwischen 10 bis 30 Gew.%.

Besonders bevorzugt sind die vernetzbaren Siliconzusammensetzungen dadurch gekennzeichnet, dass der Füllstoff (D) oberflächenbehandelt ist. Die Oberflächenbehandlung wird durch im Stand der Technik bekannte Verfahren zur Hydrophobierung feinteiliger Füllstoffe erzielt. Die Hydrophobierung kann beispielsweise entweder vor der Einarbeitung in das Polyorganosiloxan erfolgen oder auch in Gegenwart eines Polyorganosiloxans nach dem in-situ Verfahren. Beide Verfahren können sowohl im Batch-Prozess als auch kontinuierlich durchgeführt werden. Bevorzugt verwendete Hydrophobierungsmittel sind siliziumorganische Verbindungen, die mit der Füllstoffoberfläche unter Ausbildung kovalenter Bindungen zu reagieren vermögen oder dauerhaft an der Füllstoffoberfläche physisorbiert werden. Beispiele für Hydrophobierungsmittel sind Alkylchlorsilane, wie Methyltrichlorsilan, Dimethyldichlorsilan, Trimethylchlorsilan, Octyltrichlorsilan, Octadecyltrichlorsilan, Octylmethyldichlorsilan, Octadecylmethyldichlorsilan, Octyldimethylchlorsilan, Octadecyldimethylchlorsilan und tert.- Butyldimethylchlorsilan; Alkylalkoxysilane, wie Dimethyldimethoxysilan, Dimethyldiethoxysilan, Trimethylmethoxysilan und Trimethylethoxysilan; Trimethylsilanol; zyklische Diorgano(poly)siloxane, wie Octamethylcyclotetrasiloxan, Dekamethylcyclopentasiloxan; lineare Diorganopolysiloxane, wie Dimethylpolysiloxane mit Trimethylsiloxy-Endgruppen sowie Dimethylpolysiloxane mit Silanol- oder Alkoxy-Endgruppen; Disilazane, wie Hexaalkyldisilazane, insbesondere Hexamethyldisilazan, Divinyltetramethyldisilazan, Bis(trifluorpropyl)tetramethyldisilazan; zyklische Dimethylsilazane, wie Hexamethylcyclotrisilazan. Es können auch Mischungen der weiter oben genannten Hydrophobierungsmittel eingesetzt werden. Um die Hydrophobierung zu beschleunigen, erfolgt gegebenenfalls auch der Zusatz von katalytisch aktiven Additiven, wie beispielsweise Aminen, Metallhydroxiden und Wasser.

Die Hydrophobierung kann beispielsweise in einem Schritt unter Verwendung von einem oder einer Mischung aus mehreren Hydrophobiermitteln, aber auch unter Verwendung von einem oder mehreren Hydrophobiermitteln in mehreren Schritten erfolgen.

Bevorzugte Füllstoffe (D) weisen infolge einer Oberflächenbehandlung einen Kohlenstoffgehalt von mindestens 0,01 bis maximal 20 Gew.%, bevorzugt zwischen 0.1 und 10 Gew.%, besonders bevorzugt zwischen 0,5 bis 5 Gew.% auf. Besonders bevorzugt sind hydrophobierte Füllstoffe (D), bei denen die funktionellen Gruppen, welche durch die Hydrophobierung auf der Oberfläche verankert werden, nicht an der Hydrosilylierungsreaktion teilnehmen können. Ebenfalls bevorzugt sind vernetzbare Siliconzusammensetzungen die dadurch gekennzeichnet sind, dass der Füllstoff (D) eine oberflächenbehandelte Kieselsäure, aufweisend 0,01 bis 2 Gew.% Si-gebundene, aliphatisch ungesättigte Gruppen bedeutet. Beispielsweise handelt es sich bei diesen um Si-gebundene Vinylgruppen. In der erfindungsgemäßen Siliconzusammensetzung wird der Bestandteil (D) bevorzugt als einzelne oder ebenfalls bevorzugt als eine Mischung mehrerer feinteiliger Füllstoffe verwendet.

### Komponente (E)

**Komponente (E)** stellt einen Hydrosilylierungskatalysator dar. Als Komponente (E) können alle dem Stand der Technik bekannten Katalysatoren verwendet werden. Komponente (E) kann ein Platingruppenmetall sein, beispielsweise Platin, Rhodium, Ruthenium, Palladium, Osmium oder Iridium, eine metallorganische Verbindung oder eine Kombination davon. Beispiele für Komponente (E) sind Verbindungen wie Hexachloroplatin(IV)-säure, Platindichlorid, Platinacetylacetonat und Komplexe der besagten Verbindungen, die in einer Matrix oder einer kernschalenartigen Struktur eingekapselt sind. Zu den Platinkomplexen mit niedrigem Molekulargewicht der Organopolysiloxane gehören 1,3-Diethenyl-1,1,3,3 - Tetramethyldisiloxan-Komplexe mit Platin. Weitere Beispiele sind Platinphosphitkomplexe, Platinphosphinkomplexe oder Alkylplatinkomplexe. Diese Verbindungen können in einer Harzmatrix eingekapselt sein.

Die Konzentration von Komponente (E) ist zum Katalysieren der Hydrosilylierungsreaktion der Komponenten (A) und (B) und (C) bei Einwirkung ausreichend, um die hier in dem beschriebenen Verfahren erforderliche Wärme zu erzeugen. Die Menge an Komponente (E) kann zwischen 0,1 und 1000 Teile pro Million (ppm), 0,5 und 100 ppm oder 1 und 25 ppm des Platingruppenmetalls betragen, je nach Gesamtgewicht der Komponenten. Die Härtungsrate kann gering sein, wenn der Bestandteil des Platingruppenmetalls bei unter 1 ppm liegt. Die Verwendung von mehr als 100 ppm des Platingruppenmetalls ist unwirtschaftlich oder kann die Stabilität der Siliconzusammensetzung verringern.

### Komponente (F)

Die erfindungsgemäßen Siliconzusammensetzungen können optional alle weiteren Zusatzstoffe (F) enthalten, die auch bisher bei der Herstellung von additionsvernetzbaren Zusammensetzungen eingesetzt wurden. Die erfindungsgemäße Siliconzusammensetzung kann wahlweise als Bestandteile weitere Zusätze zu einem Anteil von bis zu 70 Gew.%, vorzugsweise 0 bis 40 Gew.%, enthalten. Diese Zusätze können z.B. inaktive Füllstoffe, harzartige Polyorganosiloxane, die von den Siloxanen (A), (B) und (C) verschieden sind, nicht verstärkende Füllstoffe, Fungizide, Duftstoffe, rheologische Additive, Inhibitoren wie Korrosions- oder Oxidationsinhibitoren, Lichtschutzmittel, flammabweisend machende Mittel und Mittel zur Beeinflussung der elektrischen Eigenschaften, Dispergierhilfsmittel, Lösungsmittel, Haftvermittler, Pigmente, Farbstoffe, Weichmacher, organische Polymere, Stabilisatoren, wie Hitzestabilisatoren, usw. sein. Hierzu zählen Zusätze wie Quarzmehl, Diatomeenerde, Tone, Kreide, Lithopone, Ruße, Graphit, Metalloxide, Metallcarbonate, -sulfate, Metallsalze von Carbonsäuren, Metallstäube, Fasern, wie Glasfasern, Kunststoffasern, Kunststoffpulver usw.

Diese nicht verstärkenden Füllstoffe können zudem wärmeleitend oder elektrisch leitend sein. Beispiele für wärmeleitende Füllstoffe sind Aluminiumnitrid; Aluminiumoxid; Bariumtitanat; Berylliumoxid; Bornitrid; Diamant; Grafit; Magnesiumoxid; partikuläres Metall wie beispielsweise Kupfer, Gold, Nickel oder Silber; Siliziumcarbid; Wolframcarbid; Zinkoxid und eine Kombination davon. Wärmeleitende Füllstoffe sind im Stand der Technik bekannt und im Handel erhältlich. Zum Beispiel CB-A20S und Al-43-Me sind Aluminiumoxid-Füllstoffe in verschiedenen Partikelgrößen, die im Handel bei Showa-Denko KK, Japan erhältlich sind, und AA-04, AA-2 und AA1 8 sind Aluminiumoxid-Füllstoffe, die im Handel bei Sumitomo Chemical Company erhältlich sind. Silber-Füllstoffe sind im Handel bei Metalor Technologies U.S.A. Corp. of Attleboro, Massachusetts, U.S.A., erhältlich. Bornitrid-Füllstoffe sind im Handel bei Advanced Ceramics Corporation, Cleveland, Ohio, U.S.A., erhältlich.

Beim Einsatz der optionalen Lösungsmittel (F) ist darauf zu achten, dass das Lösemittel keine nachteiligen Effekte auf das Gesamtsystem hat. Geeignete Lösungsmittel (F) sind im Stand der Technik bekannt und im Handel erhältlich. Das Lösungsmittel kann beispielsweise ein organisches Lösungsmittel mit 3 bis 20 Kohlenstoffatomen sein. Zu den Beispielen für Lösungsmittel gehören aliphatische Kohlenwasserstoffe wie beispielsweise Nonan, Decalin und Dodecan; aromatische Kohlenwasserstoffe wie beispielsweise Mesitylen, Xylen und Toluen; Ester wie beispielsweise Ethylacetat und Butyrolacton; Ether wie beispielsweise n-Butylether und Polyethylenglycolmonomethylether; Ketone wie beispielsweise Methylisobutylketon und Methylpentylketon; Siliconfluid wie beispielsweise lineare, verzweigte und zyklische Polydimethylsiloxane die sich von (A), (B) und (C) unterscheiden, und Kombinationen aus diesen Lösungsmitteln. Die optimale Konzentration eines bestimmten Lösungsmittels in einer Formulierung kann durch Routineversuche leicht bestimmt werden. Je nach Gewicht der Verbindung kann die Menge des Lösungsmittels (F) zwischen 0 und 95 % bzw. zwischen 1 und 95 % liegen.

Ein wesentlicher Vorteil der erfindungsgemäßen Zusammensetzungen liegt auch darin, dass diesen trotz des Vorhandenseins wesentlicher Anteile von 3,3,3-Trifluorpropylgruppen immer noch eine gewisse Löslichkeit in Lösungsmitteln (F) gegeben ist.

Als (F) geeignete Inhibitoren und Stabilisatoren dienen der gezielten Einstellung der Verarbeitungszeit, Anspringtemperatur und Vernetzungsgeschwindigkeit der erfindungsgemäßen Siliconzusammensetzungen. Diese Inhibitoren und Stabilisatoren sind auf dem Gebiet der additionsvernetzenden Zusammensetzungen sehr gut bekannt. Beispiele gebräuchlicher Inhibitoren sind acetylenische Alkohole, wie 1-Ethinyl-1-cyclohexanol, 2-Methyl-3-butin-2-ol und 3.5-Dimethyl-1-hexin-3-ol, 3-Methyl-1-dodecin-3-ol, Polymethylvinylcyclosiloxane wie 1,3,5,7-Tetravinyltetramethyltetracyclosiloxan niedermolekulare Siliconöle mit Methylvinyl-SiO_{1/2}-Gruppen und/oder R₂vinylSiO_{1/2}-Endgruppen, wie Divinyltetramethydisiloxan Tetravinyldimethyldisiloxan, Trialkylcyanurate, Alkylmaleate, wie Diallylmaleate, Dimethylmaleat und Diethylmaleat, Alkylfumarate, wie Diallylfumarat und Diethylfumarat, organische Hydroperoxide wie Cumolhydroperoxid, tert-Butylhydroperoxid und Pinanhydroperoxid, organische Peroxide, organische Sulfoxide organische Amine, Diamine und Amide, Phosphane und Phosphite, Nitrile, Triazole, Diaziridine und Oxime. Die Wirkung dieser Inhibitorzusätze (F) hängt von ihrer chemischen Struktur ab, so dass die Konzentration individuell bestimmt werden muss. Inhibitoren und Inhibitormischungen werden vorzugsweise in einem Mengenanteil von 0,00001 % bis 5 % bezogen auf das Gesamtgewicht der Mischung zugesetzt, bevorzugt 0,00005 bis 2 % und besonders bevorzugt 0,0001 bis 1 %.

Ein weiterer Gegenstand der vorliegenden Erfindung ist die Herstellung der erfindungsgemäßen Siliconzusammensetzung. Bei den erfindungsgemäßen Zusammensetzungen kann es sich um Einkomponenten-Siliconzusammensetzungen wie auch um Zweikomponenten-Siliconzusammensetzungen handeln. In letzterem Fall können die beiden Komponenten der erfindungsgemäßen Zusammensetzungen alle Bestandteile in beliebiger Kombination enthalten, im Allgemeinen mit der Maßgabe, dass eine Komponente nicht gleichzeitig Siloxane mit aliphatischer Mehrfachbindung, Siloxane mit Si-gebundenem Wasserstoff und Katalysator, also im Wesentlichen nicht gleichzeitig die Bestandteile (A), (B), (C) und (D) enthält.

Die in den erfindungsgemäßen Zusammensetzungen eingesetzten Verbindungen (A) und (B) und (C) werden bekanntermaßen so gewählt, dass eine Vernetzung möglich ist. So weist beispielsweise Verbindung (A) mindestens zwei aliphatisch ungesättigte Reste auf, (B) zwei Si-gebundene Wasserstoffe und (C) mindestens drei Si-gebundene Wasserstoffatome.

Das Vermischen bzw. Compoundieren der Bestandteile erfolgt nach den bisher dem Stand der Technik bekannten Methoden. Dabei spielt die Reihenfolge der Zutaten keine Rolle. Dabei kann der Compoundiervorgang von wenigen Minuten bis zu mehreren Stunden dauern. Das Einbringen von Scherenergie fördert den Prozess des Einkompoundierens des verstärkenden Füllstoffs. Die Temperatur bei der Vermischung liegt üblicherweise zwischen 0 und 200 °C, besonders bevorzugt zwischen 25 und 150 °C.

Nach vermischen aller Bestandteile liegt die dynamische Viskosität der Siliconzusammensetzung bei 25°C und einer Scherrate von 1 s⁻¹ zwischen 100 mPa•s und 1000 Pa•s, bevorzugt zwischen 500 mPa•s und 100 Pa•s und besonders bevorzugt zwischen 1000 mPa•s und 50 Pa•s.

Die erfindungsgemäßen vernetzbaren Siliconzusammensetzungen haben den Vorteil dass sie in einem einfachen Verfahren unter Verwendung leicht zugänglicher Ausgangsstoffe und damit wirtschaftlich hergestellt werden können. Die erfindungsgemäßen vernetzbaren Zusammensetzungen haben den weiteren Vorteil, dass sie als einkomponentige Formulierung bei 25°C und Umgebungsdruck eine gute Lagerstabilität aufweisen und erst bei erhöhter Temperatur rasch vernetzen. Die erfindungsgemäßen Siliconzusammensetzungen haben den Vorteil, dass diese bei zweikomponentiger Formulierung nach Vermischen der beiden Komponenten eine vernetzungsfähige Siliconmasse ergeben, deren Verarbeitbarkeit abhängig vom zugegebenen Inhibitor und dessen Gehalt über einen langen Zeitraum hinweg bei 25°C und Umgebungsdruck bestehen bleibt, also eine lange Topfzeit zeigen, und erst bei erhöhter Temperatur rasch vernetzt.

Ein weiterer Vorteil der erfindungsgemäßen Siliconzusammensetzungen ist die gute mechanische Performance trotz niedriger Viskosität der Ausgangsstoffe, was durch das gleichzeitige Vorhandensein der Komponenten (B) und (C) erreicht wird.

Werden die erfindungsgemäßen Siliconzusammensetzungen oder die daraus herstellbaren dünnen Folien als Dielektrikum beispielsweise in Sensoren, Aktuatoren oder Generatoren eingesetzt, die nach dem Prinzip dielektrischer elektroaktiver Polymere arbeiten, bieten sie den Vorteil einer höheren elektrischen Permittivität. Im Sensorbereich liegt der Vorteil bei einer erhöhten Empfindlichkeit, im Aktuatorbereich bei einer niedrigeren Betriebsspannung und im Generatorbereich bei einer höheren Effizienz der Bauteile.

Vergleicht man die dielektrischen Eigenschaften mit anderen, aus dem Stand der Technik bekannten, mit polaren Seitengruppen modifizierten Siliconelastomeren, liegt der Vorteil der erfindungsgemäßen Zusammensetzungen zudem auf einem niedrigen elektrischen Verlustwinkel. Ein weiterer Vorteil der erfindungsgemäßen Zusammensetzungen ist, dass der Härtebereich zwischen etwa 1 und 50 Shore A gewählt werden kann, was zu niedrigen, einstellbaren Elastizitätsmodulen führt.

Vorteil der erfindungsgemäßen Zusammensetzungen ist es zudem, dass bedingt durch die niedrige Viskosität in Verbindung mit für den Viskositätsbereich guten mechanischen Eigenschaften dünne Schichten oder Folien im Bereich etwa zwischen 5 und 500 µm hergestellt werden können. Das gewünschte Eigenschaftsprofil kann nur durch die sog. Kettenverlängerung aus der Kombination aus (A), (B) und (C) erreicht werden, d.h. dass Si-Vinyl-Copolymere (A), α,ω-Si-H funktionelle Copolymere (B) und Si-H-Vernetzer (C) enthalten sein müssen, welche in situ zu langen Ketten mit relativ wenig Netzknotenpunkten reagieren können, wodurch bei den vernetzten Siliconelastomeren gute mechanische Eigenschaften erzielt werden können.

Ein weiterer Vorteil der erfindungsgemäßen Zusammensetzungen ist die Möglichkeit, aus ihnen dünne Schichten mit Hilfe verschiedener Prozesse wie z.B. Coating-Verfahren (Rakel-Beschichtung, Schlitzdüsenbeschichtung, Rollenbeschichtung, etc.), hergestellt werden können. Bevorzugt liegen die dünnen Schichten im Bereich unterhalb von 500 µm und besonders bevorzugt im Bereich unterhalb von 250 µm, insbesondere unterhalb von 200 µm. Ein bevorzugtes Verfahren zur Herstellung dünner Schichten ist die Schlitzdüsenbeschichtung.

Neben der absoluten Schichtdicke spielt die Gleichmäßigkeit der Schichtdicke über die gesamte produzierte Bahn eine entscheidende Rolle für Anwendungen, bei denen die Folie z.B. als Dielektrikum oder als Membran verwendet wird.

Ein weiterer Gegenstand der vorliegenden Erfindung ist daher die Verwendung der erfindungsgemäßen Siliconzusammensetzungen zur Herstellung von dünnen Siliconfolien mit einer Foliendicke von 0,1 bis 500 µm.

Die Durchschlagsspannung der erzeugten Siliconfolie beträgt mindestens 30 kV/mm. Die Siliconfolie kann in Aktoren, Sensoren oder Generatoren verwendet werden.

Ein mögliches Verfahren für das Schlitzdüsenverfahren ist das kontinuierliche Verfahren zur Herstellung dünner Siliconfolien mit einer Foliendicke von 0,1 bis 500 µm, und einer Dickengenauigkeit von ±5 % gemessen auf einer Fläche von 200 cm²,
dadurch gekennzeichnet, dass
i) die lösungsmittelhaltige oder lösungsmittelfreie, erfindungsgemäße Siliconzusammensetzung durch den Spalt einer Schlitzdüse auf einen sich bewegenden Träger aufgetragen wird,
ii) anschließend aus der Siliconschicht, welche sich auf der Trägerfolie ausbildet das Lösungsmittel, falls vorhanden, entfernt und die Siliconschicht vernetzt wird,
iii) nach der Vernetzung die entstandene Siliconfolie vom Träger getrennt werden kann,
mit folgenden Maßgaben:
- die Schlitzdüse in Schritt i) steht in einem Winkel zwischen 10° und 90° (bevorzugt 90°, insbesondere vertikal von oben) zum Träger;
- die Laufgeschwindigkeit des Trägers liegt zwischen 0,1 und 500 m/min;
- die dynamische Viskosität gemessen nach DIN53019 (bei 25°C und einer Scherrate von 1 s⁻¹) der erfindungsgemäßen Siliconzusammensetzung liegt zwischen 100 mPa•s und 1000 Pa•s.

Die so hergestellte Siliconfolie kann beispielsweise in Mehrlagenverbunden eingesetzt werden, wobei diese mindestens eine Lage der Siliconfolie enthalten. Mehrlagenverbunde können als dielektrische, elektroaktive Polymere (EAP) in Aktoren, Sensoren oder Generatoren verwendet werden.

Es hat sich zudem herausgestellt, dass die erfindungsgemäßen Siliconzusammensetzung auch zur Herstellung von medienbeständigen Bauteilen wie Dichtungen mittels Molding-Verfahren (Spritzguss, Rapid Prototyping, etc.) geeignet sind, da sie beispielsweise gegenüber unpolaren Lösungsmitteln beständig sind.

**Ein weiterer Gegenstand** der vorliegenden Erfindung ist daher die Verwendung der erfindungsgemäßen Siliconzusammensetzung zur Herstellung von medienbeständigen Bauteilen.

Zudem zeigt sich, dass sich die erfindungsgemäßen Siliconzusammensetzung auch zur Formkörperherstellung im 3D-Druck eignet, bevorzugt nach dem generativen drop-on-demand (DOD)-Verfahren.

**Ein weiterer Gegenstand** der vorliegenden Erfindung ist daher die Verwendung der erfindungsgemäßen Siliconzusammensetzung zur Formkörperherstellung im 3D-Druck nach dem generativen drop-on-demand (DOD)-Verfahren.

### Viskositätsbestimmung

Die Viskositäten in der vorliegenden Erfindung sind dynamische Viskositäten η und wurden an einem Rheometer Typ "MCR 302" der Fa. Anton Paar nach DIN EN ISO 3219: 1994 und DIN 53019 gemessen, wobei ein Kegel-Platte-System (Kegel CP50-2) mit einem Öffnungswinkel von 2° verwendet wurde. Die Kalibrierung des Gerätes erfolgte mit Normalöl 10000 der Physikalisch-Technischen Bundesanstalt. Die Messtemperatur beträgt 25,00°C +/- 0,05°C, die Messzeit 3 min. Die Viskositätsangabe stellt den arithmetischen Mittelwert von drei unabhängig durchgeführten Einzelmessungen dar. Die Messunsicherheit der dynamischen Viskosität beträgt 1,5 %. Der Schergeschwindigkeitsgradient wurde in Abhängigkeit von der Viskosität gewählt und wird für jede Viskositätsangabe separat ausgewiesen.

### Beispiele

Die folgenden Beispiele dienen der Erläuterung der Erfindung ohne diese zu beschränken.

In den nachstehend beschriebenen Beispielen beziehen sich alle Angaben von Teilen und Prozentsätzen, falls nicht anders angegeben, auf das Gewicht. Sofern nicht anders angegeben, werden die nachstehenden Beispiele bei einem Druck der umgebenden Atmosphäre, also etwa bei 1000 hPa, und bei Raumtemperatur, also bei etwa 25°C, bzw. bei einer Temperatur, die sich beim Zusammengeben der Reaktanden bei Raumtemperatur ohne zusätzliche Heizung oder Kühlung einstellt, durchgeführt. Im Folgenden beziehen sich alle dynamischen Viskositätsangaben auf eine Temperatur von 25 °C. Die nachfolgenden Beispiele erläutern die Erfindung, ohne dabei beschränkend zu wirken. Angegebene Viskositätswerte beziehen sich auf die dynamische Viskosität η, bestimmt mit Hilfe eines Rheometers falls nicht anders angegeben bei einer Scherrate von 1 s⁻¹ und angegeben in mPa·s.

Es werden folgende Abkürzungen verwendet:
- Bsp.: Beispiel
- Nr.: Nummer
- PDMS: Polydimethylsiloxan
- FPDMS: fluorhaltiges Polydimethylsiloxan
- LSR: Liquid Silicone Rubber
- HTV: Hochtemperaturvernetzend
- RTV: Raumtemperaturvernetzend
- Gew.%: Gewichtsprozent, w/w
- η: dynamische Viskosität in mPa·s
- Mol%: Mol-Prozent, Stoffmengenanteil
- mmol/g: Millimol funktionelle Gruppe pro Gramm Verbindung
- M: Molmasse in g/mol
- GM: Grundmischung
- KS: pyrogene Kieselsäure

- M=M-Einheit: monofunktioneller Siloxanrest, R₃SiO_{1/2}
- D=D-Einheit: difunktioneller Siloxanrest, R₂SiO_{2/2}
- T=T-Einheit: trifunktioneller Siloxanrest, R₃SiO_{3/2}
- Q=Q-Einheit: tetrafunktioneller Siloxanrest, SiO_{4/2}
wobei R für substituierte oder nicht substituierte, gesättigte oder nicht gesättigte org. Reste stehen.

In den folgenden Beispielen werden verschiedene vinyl-, und fluorogruppenhaltige Polymere (=Komponente (A)) mit der Formel (1a) verwendet, welche eine Teilmenge der oben definierten Formel (1) darstellt:

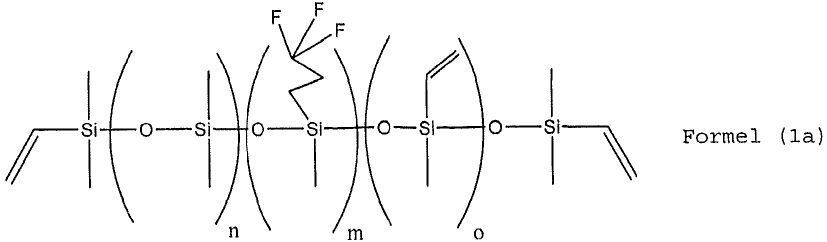

**Tabelle 1: Beispiele für Polymere (A)**

| Polymer | n | m | o | n+m+o | η | M | Si-Vinyl [mmol/g] | mol% Fluoro-D |
|---|---|---|---|---|---|---|---|---|
| A1 | 33 | 10 | 0 | 43 | 130 | 4189 | 0,477 | 22,2 |
| A2 | 85 | 23 | 0 | 108 | 310 | 10066 | 0,199 | 20,9 |
| A3 | 120 | 30 | 0 | 150 | 500 | 13749 | 0,145 | 19,7 |
| A4 | 240 | 75 | 0 | 315 | 3500 | 29652 | 0,067 | 23,7 |
| A5 | 27 | 20 | 0 | 47 | 280 | 5305 | 0,377 | 40,8 |
| A6 | 58 | 40 | 0 | 98 | 500 | 10720 | 0,187 | 40,0 |
| A7 | 91 | 55 | 0 | 146 | 1000 | 15503 | 0,129 | 37,2 |
| A8 | 230 | 154 | 0 | 384 | 19000 | 41238 | 0,048 | 39,9 |
| A9 | 14 | 23 | 0 | 37 | 500 | 4811 | 0,416 | 59,0 |
| A10 | 39 | 60 | 0 | 99 | 1600 | 12434 | 0,161 | 59,4 |
| A11 | 56 | 87 | 0 | 143 | 3500 | 17905 | 0,112 | 60,0 |
| A12 | 120 | 185 | 0 | 305 | 70000 | 37932 | 0,053 | 60,3 |
| A13 | 4 | 25 | 0 | 29 | 900 | 4383 | 0,456 | 80,6 |
| A14 | 18 | 78 | 0 | 96 | 3300 | 13688 | 0,146 | 79,6 |
| A15 | 35 | 142 | 0 | 177 | 16200 | 24932 | 0,080 | 79,3 |
| A16 | 50 | 215 | 0 | 265 | 110000 | 37431 | 0,053 | 80,5 |
| A17 | 25 | 20 | 1 | 46 | 290 | 5243 | 0,381 | 41,7 |
| A18 | 55 | 40 | 2 | 97 | 490 | 10670 | 0,187 | 40,4 |
| A19 | 85 | 55 | 3 | 143 | 1050 | 15317 | 0,131 | 37,9 |
| A20 | 225 | 154 | 2 | 381 | 18900 | 41040 | 0,049 | 40,2 |

Des Weiteren werden α,ω-endständige Polymere (=Komponente (B)) der allgemeinen Formel (2a) verwendet, welche eine Teilmenge der oben definierten Formel (2) darstellt:

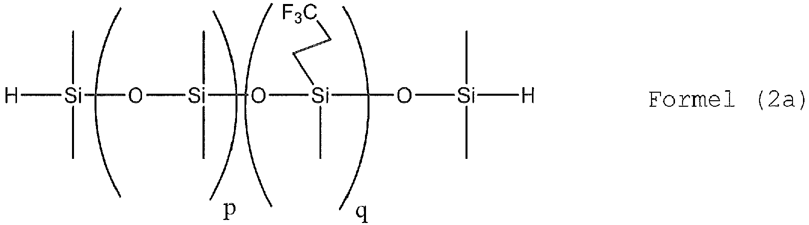

**Tabelle 2: Beispiele für Polymere (B).**

| Polymer | p | q | p+q | η | M | Si-H [mmol/g] | mol% Fluoro-D |
|---|---|---|---|---|---|---|---|
| B1 | 15 | 5 | 20 | 80 | 2024 | 0,988 | 22,7 |
| B2 | 33 | 10 | 43 | 120 | 4137 | 0,483 | 22,2 |
| B3 | 130 | 35 | 165 | 600 | 15217 | 0,131 | 21,0 |
| B4 | 12 | 10 | 22 | 180 | 2583 | 0,774 | 41,7 |
| B5 | 27 | 20 | 47 | 300 | 5253 | 0,381 | 40,8 |
| B6 | 82 | 54 | 136 | 1080 | 14629 | 0,137 | 39,1 |
| B7 | 6 | 12 | 18 | 280 | 2450 | 0,816 | 60,0 |
| B8 | 14 | 23 | 37 | 480 | 4759 | 0,420 | 59,0 |
| B9 | 56 | 86 | 142 | 3350 | 17697 | 0,113 | 59,7 |
| B10 | 2 | 17 | 19 | 650 | 2934 | 0,682 | 81,0 |
| B11 | 4 | 24 | 28 | 890 | 4175 | 0,479 | 80,0 |
| B12 | 34 | 139 | 173 | 15900 | 24338 | 0,082 | 79,4 |

Als Vernetzer finden fluorgruppenhaltige Vernetzer (= Komponente (C)) Verwendung, welche durch die allgemeine Formel (3a) wiedergegeben sind, welche eine Teilmenge der oben definierten Formel (3) darstellt:

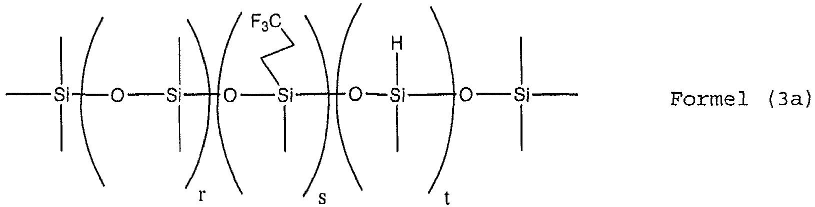

**Tabelle 3: Beispiele für Vernetzer (C)**

| Polymer | r | s | t | r+s+t | η | M | Si-H [mmol/g] | mol% Fluoro-D | mmol Si-H/g |
|---|---|---|---|---|---|---|---|---|---|
| C1 | 45 | 24 | 9 | 78 | 270 | 7749 | 0,258 | 30,0 | 1,2 |
| C2 | 48 | 20 | 18 | 86 | 230 | 7887 | 0,254 | 22,7 | 2,3 |
| C3 | 25 | 11 | 36 | 72 | 200 | 5861 | 0,341 | 14,9 | 6,1 |

Die verwendeten Polymere der Formel (3a) enthalten die Trimethylsilylgruppe als Kettenenden, wobei die Beispiele die Erfindung diesbezüglich nicht beschränken und auch andere Funktionalitäten am Kettenende eingesetzt werden können, wie beispielsweise der Dimethyl-Si-H Rest oder der Dimethylvinylrest.

Als Komponente (D) wird eine mit Trimethylsilylgruppen vorhydrophobierte pyrogene Kieselsäure mit einer Oberfläche von 130 m2/g nach DIN EN ISO 9277 verwendet.

Standardvorgehen für die Herstellung der Grundmischung 1 (GM 1): In einem Kneter mit dem Volume 200 ml werden 78,0 g α,ω-Dimethylvinylsilyl-endblockiertes Polymer (A) vorgelegt. Bei Raumtemperatur werden innerhalb 35 Minuten 78,0 g mit Trimethylsilylgruppen vorhydrophobierte pyrogene Kieselsäure (Komponente (D)) mit einer BET-Oberfläche von 130 m²/g nach DIN EN ISO 9277 eingeknetet. Dabei entsteht eine hochviskose Masse, welche im Kneter eine Stunde bei 150°C wärmebehandelt wird. Nach dem Abkühlen auf etwa 50°C wird die in Tabelle 4 angegebene Menge Polymer (A) zugegeben. Die dynamischen Viskositäten η nach DIN 53019 bei 25 °C und einer Scherrate d von 25 s⁻¹ der jeweiligen GM 1 sind in der Tabelle 4 angegeben in mPa·s.

Standardvorgehen für die Herstellung der Grundmischung 2 (GM 2): In einem Kneter mit dem Volume 200 ml werden 78,0 g α,ω-Dimethylvinylsilyl-endblockiertes Polymer (A) vorgelegt (Anfangsmenge). Bei Raumtemperatur werden innerhalb 35 Minuten 78,0 g mit Trimethylsilylgruppen vorhydrophobierte pyrogene Kieselsäure (Komponente (D)) mit einer BET-Oberfläche von 130 m²/g nach DIN EN ISO 9277 eingeknetet. Dabei entsteht eine hochviskose Masse, welche im Kneter eine Stunde bei 150°C wärmebehandelt wird. Nach dem Abkühlen auf etwa 50 °C wird die in Tabelle 4 angegebene Menge Polymer (B) und gegebenenfalls Polymer (A) zugegeben (Zusatzmenge). Die dynamischen Viskositäten η nach DIN 53019 bei 25 °C und einer Scherrate d von 25 s⁻¹ der jeweiligen GM 2 sind in der Tabelle 4 angeben in mPa·s.

**Tabelle 4: Grundmischungen GM 1 und GM 2.**

| GM | Polymer | Anfangsmenge [g] | vorhydrophob KS [g] | Zusatz-Polymer | Zusatzmenge Polymer [g] | [%] Füllstoff | η (d=25) [mPa·s] | mmol Si-Vi /g | mmol Si-H /g |
|---|---|---|---|---|---|---|---|---|---|
| 1a | A1 | 78 | 78 | A1 | 78 | 33,3 | 4000 | 31,8 | 0 |
| 1b | A2 | 78 | 78 | A2 | 78 | 33,3 | 6500 | 13,2 | 0 |
| 1c | A3 | 78 | 78 | A3 | 78 | 33,3 | 15000 | 9,7 | 0 |
| 1d | A4 | 78 | 78 | A4 | 78 | 33,3 | 74500 | 4,5 | 0 |
| 1e | A5 | 78 | 78 | A5 | 78 | 33,3 | 5500 | 25,1 | 0 |
| 1f | A6 | 78 | 78 | A6 | 78 | 33,3 | 21500 | 12,4 | 0 |
| 1g | A7 | 78 | 78 | A7 | 78 | 33,3 | 42000 | 8,6 | 0 |
| 1h | A8 | 78 | 78 | A8 | 78 | 33,3 | 150000 | 3,2 | 0 |
| 1i | A9 | 78 | 78 | A9 | 78 | 33,3 | 17300 | 27,7 | 0 |
| 1j | A10 | 78 | 78 | A10 | 78 | 33,3 | 56400 | 10,7 | 0 |
| 1k | A11 | 78 | 78 | A11 | 78 | 33,3 | 79600 | 7,4 | 0 |
| 1l | A12 | 78 | 78 | A12 | 78 | 33,3 | 350000 | 3,5 | 0 |
| 1m | A13 | 78 | 78 | A13 | 78 | 33,3 | 56400 | 30,4 | 0 |
| 1n | A14 | 78 | 78 | A14 | 78 | 33,3 | 88300 | 9,7 | 0 |
| 1o | A15 | 78 | 78 | A15 | 78 | 33,3 | 138500 | 5,3 | 0 |
| 1p | A16 | 78 | 78 | A16 | 78 | 33,3 | 531000 | 3,6 | 0 |
| 1q | A17 | 78 | 78 | A17 | 78 | 33,3 | 6300 | 25,4 | 0 |
| 1r | A18 | 78 | 78 | A18 | 78 | 33,3 | 14300 | 12,5 | 0 |
| 1s | A19 | 78 | 78 | A19 | 78 | 33,3 | 38000 | 8,7 | 0 |
| 1t | A20 | 78 | 78 | A20 | 78 | 33,3 | 148000 | 3,2 | 0 |
| 1aa | A2 | 78 | 78 | A1 | 100 | 30, 5 | 4250 | 24,7 | 0 |
| 1ab | A3 | 78 | 78 | A1 | 100 | 30, 5 | 7300 | 23,1 | 0 |
| 1ac | A4 | 78 | 78 | A1 | 100 | 30,5 | 15300 | 20,7 | 0 |
| 1ad | A6 | 78 | 78 | A5 | 100 | 30, 5 | 9800 | 20,4 | 0 |
| 1ae | A7 | 78 | 78 | A5 | 100 | 30,5 | 13000 | 18,7 | 0 |
| 1af | A8 | 78 | 78 | A5 | 100 | 30, 5 | 27500 | 16,2 | 0 |
| 1ag | A10 | 78 | 78 | A9 | 100 | 30, 5 | 21300 | 21,1 | 0 |
| 1ah | A11 | 78 | 78 | A9 | 100 | 30, 5 | 35000 | 19,6 | 0 |
| 1ai | A12 | 78 | 78 | A9 | 100 | 30,5 | 71300 | 17,8 | 0 |
| 1aj | A14 | 78 | 78 | A13 | 100 | 30,5 | 22300 | 22,3 | 0 |
| 1ak | A15 | 78 | 78 | A13 | 100 | 30, 5 | 57800 | 20,3 | 0 |
| 1al | A16 | 78 | 78 | A13 | 100 | 30,5 | 113000 | 19,5 | 0 |
| 1am | A18 | 78 | 78 | A17 | 100 | 30,5 | 7900 | 20,6 | 0 |
| 1an | A19 | 78 | 78 | A17 | 100 | 30,5 | 15000 | 18,9 | 0 |
| 1ao | A20 | 78 | 78 | A17 | 100 | 30,5 | 38000 | 16,4 | 0 |
| 1ap | A1 | 50 | 50 | A1 | 100 | 25,0 | 2800 | 35,8 | 0 |
| 1ar | A2 | 50 | 50 | A2 | 100 | 25,0 | 4300 | 14,9 | 0 |
| 1aq | A3 | 50 | 50 | A3 | 100 | 25,0 | 11300 | 10,9 | 0 |
| 1ar | A4 | 50 | 50 | A4 | 100 | 25,0 | 48500 | 5,1 | 0 |
| 1as | A5 | 50 | 50 | A5 | 100 | 25,0 | 3850 | 28,3 | 0 |
| 1at | A6 | 50 | 50 | A6 | 100 | 25,0 | 13400 | 14,0 | 0 |
| 1au | A7 | 50 | 50 | A7 | 100 | 25,0 | 23800 | 9,7 | 0 |
| 1av | A8 | 50 | 50 | A8 | 100 | 25,0 | 91000 | 3,6 | 0 |
| 1aw | A9 | 50 | 50 | A9 | 100 | 25,0 | 13800 | 31,2 | 0 |
| 1ax | A10 | 50 | 50 | A10 | 100 | 25,0 | 33000 | 12,1 | 0 |
| 1ay | A11 | 50 | 50 | A11 | 100 | 25,0 | 52800 | 8,4 | 0 |
| 1az | A12 | 50 | 50 | A12 | 100 | 25,0 | 195000 | 4,0 | 0 |
| 2a | A1 | 78 | 78 | B2 | 78 | 33,3 | 2500 | 15,9 | 33,9 |
| 2b | A2 | 78 | 78 | B2 | 78 | 33,3 | 3800 | 6,6 | 33,9 |
| 2c | A3 | 78 | 78 | B2 | 78 | 33,3 | 8300 | 4,8 | 33,9 |
| 2a | A4 | 78 | 78 | B2 | 78 | 33,3 | 35000 | 2,2 | 33,9 |
| 2d | A5 | 78 | 78 | B5 | 78 | 33,3 | 2800 | 12,6 | 26,7 |
| 2e | A6 | 78 | 78 | B5 | 78 | 33,3 | 13000 | 6,2 | 26,7 |
| 2f | A7 | 78 | 78 | B5 | 78 | 33,3 | 29500 | 4,3 | 26,7 |
| 2g | A8 | 78 | 78 | B5 | 78 | 33,3 | 75900 | 1,6 | 26,7 |
| 2h | A9 | 78 | 78 | B8 | 78 | 33,3 | 9800 | 13,9 | 29,4 |
| 2i | A10 | 78 | 78 | B8 | 78 | 33,3 | 23000 | 5,4 | 29,4 |
| 2j | A11 | 78 | 78 | B8 | 78 | 33,3 | 38500 | 3,7 | 29,4 |
| 2k | A12 | 78 | 78 | B8 | 78 | 33,3 | 131000 | 1,8 | 29,4 |
| 2l | A13 | 78 | 78 | B11 | 78 | 33,3 | 23200 | 15,2 | 33,6 |
| 2m | A14 | 78 | 78 | B11 | 78 | 33,3 | 41800 | 4,9 | 33,6 |
| 2n | A15 | 78 | 78 | B11 | 78 | 33,3 | 138500 | 2,7 | 33,6 |
| 2o | A16 | 78 | 78 | B11 | 78 | 33,3 | 231500 | 1,8 | 33,6 |
| 2p | A17 | 78 | 78 | B5 | 78 | 33,3 | 3100 | 12,7 | 33,9 |
| 2q | A18 | 78 | 78 | B5 | 78 | 33,3 | 6900 | 6,2 | 33,9 |
| 2r | A19 | 78 | 78 | B5 | 78 | 33,3 | 15800 | 4,4 | 33,9 |
| 2s | A20 | 78 | 78 | B5 | 78 | 33,3 | 69300 | 1,6 | 33,9 |

In den folgenden Beispielen werden zweikomponentige, vernetzbare Silicone formuliert. Die Maßgabe für erfindungsgemäße Zusammensetzungen ist das Vorhandenseins eines α,ω-Si-H-funktionellen Polymers (B) welches gegebenenfalls andere Funktionalitäten tragen kann. Als Vergleichsbeispiel dienen Zusammensetzungen, bei denen keine Kettenverlängerung durch das Vorhandensein dieses Polymers (B) stattfinden kann.

Herstellung der zweikomponentigen, additionsvernetzenden Zusammensetzungen, Komponente I:
Zur Herstellung der Komponente I werden zu 100 g der Grundmischung 1 0,08 g 1-Ethinylcyclohexanol (=Inhibitor, Komponente (F)) und 10 ppm eines Platin-Divinyldisiloxankomplexes (= Karstedt-Katalysator, 10 ppm bezogen auf das Metall Pt, Komponente (E)) und gegebenenfalls weitere Komponenten wie Polymere, Grundmassen oder Zusatzstoffe zugegeben und mit einem Flügelrührer 10 Minuten bei einer Drehzahl von 200 U/min bei Raumtemperatur gerührt. In den folgenden Beispielen sind in der (A)-Komponente sowohl der Hydrosilylierungskatalysator (E) als auch ggf. ein Inhibitor (F) vorhanden, ohne dass diese erneut aufgeführt werden.

Zur Herstellung der Komponente II werden zu 100 g der Grundmischung 2, sowie eine Menge Polymer (A) sowie ggf. weitere Zusätze zugegeben und mit einem Flügelrührer 10 Minuten bei einer Drehzahl von 200 U/min bei Raumtemperatur gerührt.

In den Beispielen werden die Dichte nach ISO 2811, die Härte Shore A nach ISO 868, die Reißdehnung nach ISO 37, die Reißfestigkeit nach ISO 37, sowie der Weiterreißwiderstand nach ASTM D 624 B bestimmt.
**Beispiel 1:**
I-Komponente
80 g Grundmischung 1a
20 g Polymer A3
η (mPa·s) = 3500
II-Komponente
10 g Grundmischung 1a
80 g Grundmischung 2a
3 g Polymer A3
20 g Vernetzer C3
η (mPa·s) = 3300
Nach dem Mischen (1:1) und Vernetzen (10 min bei 165 °C verpresst) weist der Siliconkautschuk folgende Parameter auf:

| | |
|---|---|
| Härte [Shore A]: | 35 |
| Reißfestigkeit [N/mm²]: | 2,5 |
| Reißdehnung [%] : | 280 |
| Weiterreißfestigkeit [N/mm]: | 3,1 |
| el. Permittivität (50 Hz): | 5,2 |

**Beispiel 2:**
I-Komponente
80 g Grundmischung 1c
20 g Polymer A3
η (mPa·s) = 5000
II-Komponente
10 g Grundmischung 1d
80 g Grundmischung 2c
3 g Polymer A3
8 g Vernetzer C3
η (mPa·s) = 4500
Nach dem Mischen (1:1) und Vernetzen (10 min bei 165 °C verpresst) weist der Siliconkautschuk folgende Parameter auf:

| | |
|---|---|
| Härte [Shore A]: | 28 |
| Reißfestigkeit [N/mm²]: | 2,3 |
| Reißdehnung [%]: | 360 |
| Weiterreißfestigkeit [N/mm]: | 3,3 |
| el. Permittivität (50 Hz): | 5,2 |

**Beispiel 3 (Vergleichsbeispiel) :**
I-Komponente
80 g Grundmischung 1a
20 g Polymer A3
η (mPa·s) = 3500
II-Komponente
90 g Grundmischung 1a
3 g Polymer A3
11 g Vernetzer C3
η (mPa·s) = 3300
Nach dem Mischen (1:1) und Vernetzen (10 min bei 165 °C verpresst) weist der Siliconkautschuk folgende Parameter auf:

| | |
|---|---|
| Härte [Shore A] : | 30 |
| Reißfestigkeit [N/mm²]: | 0,8 |
| Reißdehnung [%]: | 120 |
| Weiterreißfestigkeit [N/mm]: | 0,9 |
| el. Permittivität (50 Hz): | 5,2 |

**Beispiel 4:**
I-Komponente
80 g Grundmischung 1ae
20 g Polymer A7
η (mPa·s) = 8000
II-Komponente
10 g Grundmischung 1ae
80 g Grundmischung 2f
3 g Polymer A7
25 g Vernetzer C2
η (mPa·s) = 2000
Nach dem Mischen (1:1) und Vernetzen (10 min bei 165 °C verpresst) weist der Siliconkautschuk folgende Parameter auf:

| | |
|---|---|
| Härte [Shore A] : | 24 |
| Reißfestigkeit [N/mm²] : | 4,0 |
| Reißdehnung [%]: | 320 |
| Weiterreißfestigkeit [N/mm]: | 3,5 |
| el. Permittivität (50 Hz): | 5,8 |

Beispiel 5 (Vergleichsbeispiel):
I-Komponente
80 g Grundmischung 1ae
20 g Polymer A7
η (mPa·s) = 8000
II-Komponente
60 g Grundmischung 1a
3 g Polymer A3
35 g Vernetzer C3
η (mPa·s) = 1800
Nach dem Mischen (1:1) und Vernetzen (10 min bei 165 °C verpresst) weist der Siliconkautschuk folgende Parameter auf:

| | |
|---|---|
| Härte [Shore A]: | 22 |
| Reißfestigkeit [N/mm²]: | 1,0 |
| Reißdehnung [%]: | 110 |
| Weiterreißfestigkeit [N/mm]: | 1,3 |
| el. Permittivität (50 Hz): | 5,8 |

## Patentansprüche

1. Siliconzusammensetzungen enthaltend,
(A) 20 - 70 Gew.% mindestens eines Polyorganosiloxans mit einer dynamischen Viskosität von 50 - 100.000 mPa·s bei 25°C und einer Scherrate d = 1 s⁻¹, und mit mindestens zwei Resten pro Molekül mit aliphatischen Kohlenstoff-Kohlenstoff-Mehrfachbindungen, welches noch mindestens 5 Mol% 3,3,3-Trifluorpropylmethylsiloxy oder mindestens 5 Mol% Bis(3,3,3-Trifluorpropyl)siloxy-Einheiten oder mindestens 5 Mol% einer Mischung aus beiden aufweist,
(B) 10 - 70 Gew.% mindestens eines linearen α,ω-Si-H funktionellen Polyorganosiloxans mit einer dynamischen Viskosität von 50 - 100.000 mPa·s bei 25 °C und einer Scherrate d = 1 s⁻¹, welches noch mindestens 5 Mol% 3,3,3-Trifluorpropylmethylsiloxy oder mindestens 5 Mol% Bis(3,3,3-Trifluorpropyl)siloxy-Einheiten oder mindestens 5 Mol% einer Mischung aus beiden aufweist,
(C) 0,1 - 50 Gew.% mindestens einer siliciumorganischer Verbindung, welche mindestens 3 an Silicium gebundene Wasserstoffatome pro Molekül enthalten, welche noch mindestens 2,5 Mol% 3,3,3-Trifluorpropylmethylsiloxy- oder mindestens 2,5 Mol% Bis(3,3,3-Trifluor-propyl) siloxy-Einheiten oder mindestens 2,5 Mol% einer Mischung aus beiden aufweist,
(D) 1 - 40 Gew.% verstärkender, oberflächenbehandelter Füllstoff mit einer spezifischen BET-Oberfläche nach DIN EN ISO 9277 von mindestens 50 m²/g, wobei die Oberflächenbehandlung ein Hydrophobierung ist und dadurch der Kohlenstoffgehalt des Füllstoffes (D) mindestens 0,01 bis maximal 20 Gew.% beträgt,
(E) mindestens einen Hydrosilylierungskatalysator,
wobei die Mengen stets so gewählt werden, dass sie insgesamt 100 Gew.% betragen.

2. Verwendung der Siliconzusammensetzung gemäß Anspruch 1 zur Herstellung von Siliconfolien mit einer Foliendicke von 0,1 bis 500 µm.

3. Kontinuierliches Verfahren zur Herstellung dünner Siliconfolien mit einer Foliendicke von 0,1 bis 500 µm, und einer Dickengenauigkeit von ±5 % gemessen auf einer Fläche von 200 cm²,
**dadurch gekennzeichnet, dass**
i) die lösungsmittelhaltige oder lösungsmittelfreie Siliconzusammensetzung gemäß Anspruch 1 durch den Spalt einer Schlitzdüse auf einen sich bewegenden Träger aufgetragen wird,
ii) anschließend aus der Siliconschicht, welche sich auf der Trägerfolie ausbildet das Lösungsmittel, falls vorhanden, entfernt und die Siliconschicht vernetzt wird,
iii) nach der Vernetzung die entstandene Siliconfolie vom Träger getrennt werden kann,
mit folgenden Maßgaben:
- die Schlitzdüse in Schritt i) steht in einem Winkel zwischen 10° und 90° zum Träger;
- die Laufgeschwindigkeit des Trägers liegt zwischen 0,1 und 500 m/min;
- die dynamische Viskosität gemessen nach DIN53019 bei 25°C und einer Scherrate von 1 s⁻¹ der Siliconzusammensetzung liegt zwischen 100 mPa·s und 1000 Pa·s.

4. Mehrlagenverbund, **dadurch gekennzeichnet, dass** mindestens eine Lage der Siliconfolie, gemäß Anspruch 2 oder erhältlich gemäß Anspruch 3, enthalten ist.

5. Verwendung der Silikonfolie gemäß Anspruch 2 oder erhältlich gemäß Anspruch 3 in Aktoren, Sensoren oder Generatoren.

6. Verwendung der Siliconzusammensetzung gemäß Anspruch 1 zur Herstellung von medienbeständigen Bauteilen.

7. Verwendung der Siliconzusammensetzung gemäß Anspruch 1 zur Herstellung von Formkörpern im 3D-Druck nach dem generativen drop-on-demand (DOD)-Verfahren.

## Claims

1. Silicone compositions comprising
(A) 20-70 wt% of at least one polyorganosiloxane having a dynamic viscosity of 50-100 000 mPa·s at 25°C and a shear rate d = 1 s⁻¹,
and having at least two radicals per molecule with aliphatic carbon-carbon multiple bonds, and further comprising at least 5 mol% of 3,3,3-trifluoropropylmethylsiloxy or at least 5 mol% of bis(3,3,3-trifluoropropyl)siloxy units or at least 5 mol% of a mixture of both,
(B) 10-70 wt% of at least one linear α,ω-Si-H functional polyorganosiloxane having a dynamic viscosity of 50-100 000 mPa·s at 25°C and a shear rate d = 1 s⁻¹, and further comprising at least 5 mol% of 3,3,3-trifluoropropylmethylsiloxy or at least 5 mol% of bis(3,3,3-trifluoropropyl)siloxy units or at least 5 mol% of a mixture of both,
(C) 0.1-50 wt% of at least one organosilicon compound containing at least 3 hydrogen atoms bonded to silicon per molecule, and further comprising at least 2.5 mol% of 3,3,3-trifluoropropylmethylsiloxy or at least 2.5 mol% of bis(3,3,3-trifluoropropyl)siloxy units or at least 2.5 mol% of a mixture of both,
(D) 1-40 wt% of reinforcing, surface-treated filler having a specific BET surface area according to DIN EN ISO 9277 of at least 50 m²/g, where the surface treatment is a hydrophobization and as a result the carbon content of the filler (D) is at least 0.01 up to a maximum of 20 wt%,
(E) at least one hydrosilylation catalyst,
the amounts always being selected so that they amount in total to 100 wt%.

2. Use of the silicone composition according to Claim 1 for producing silicone films having a film thickness of 0.1 to 500 µm.

3. Continuous process for producing thin silicone films having a film thickness of 0.1 to 500 µm and a thickness accuracy of ± 5% measured over an area of 200 cm²,
**characterized in that**
i) the solvent-containing or solvent-free silicone composition according to Claim 1 is applied through the slot of a slot die to a moving support,
ii) subsequently the solvent, if present, is removed from the silicone layer which forms on the support film, and the silicone layer is crosslinked,
iii) the resulting silicone film can be separated from the support after the crosslinking,
with the following provisos:
- the slot die in step i) is at an angle of between 10° and 90° to the support;
- the running speed of the support is between 0.1 and 500 m/min;
- the dynamic viscosity as measured according to DIN 53019 at 25°C and a shear rate of 1 _{S}⁻¹ of the silicon composition is between 100 mPa·s and 1000 Pa·s.

4. Multi-ply assembly **characterized in that** there is at least one ply of the silicone film according to Claim 2 or obtainable according to Claim 3.

5. Use of the silicone film according to Claim 2 or obtainable according to Claim 3 in actuators, sensors or generators.

6. Use of the silicone composition according to Claim 1 for producing media-resistant components.

7. Use of the silicone composition according to Claim 1 for producing shaped articles in 3D printing by the generative drop-on-demand (DOD) process.

## Revendications

1. Compositions de silicone contenant :
(A) 20 à 70 % en poids d'au moins un polyorganosiloxane ayant une viscosité dynamique de 50 à 100 000 mPa·s à 25 °C et à un taux de cisaillement d = 1 s⁻¹, et comprenant au moins deux radicaux par molécule contenant des liaisons multiples carbone-carbone aliphatiques, qui comprend encore au moins 5 % en moles d'unités 3,3,3-trifluoropropylméthylsiloxy ou au moins 5 % en moles d'unités bis(3,3,3-trifluoropropyl)siloxy ou au moins 5 % en moles d'un mélange des deux,
(B) 10 à 70 % en poids d'au moins un polyorganosiloxane linéaire à fonction α,ω-Si-H ayant une viscosité dynamique de 50 à 100 000 mPa·s à 25 °C et à un taux de cisaillement d = 1 s⁻¹, qui comprend encore au moins 5 % en moles d'unités 3,3,3-trifluoropropylméthylsiloxy ou au moins 5 % en moles d'unités bis(3,3,3-trifluoropropyl)siloxy ou au moins 5 % en moles d'un mélange des deux,
(C) 0,1 à 50 % en poids d'au moins un composé organique de silicium, qui contient au moins 3 atomes d'hydrogène reliés au silicium par molécule, qui comprend encore au moins 2,5 % en moles d'unités 3,3,3-trifluoropropylméthylsiloxy ou au moins 2,5 % en moles d'unités bis(3,3,3-trifluoropropyl)siloxy ou au moins 2,5 % en moles d'un mélange des deux,
(D) 1 à 40 % en poids d'une charge renforçante traitée en surface ayant une surface spécifique BET selon DIN EN ISO 9277 d'au moins 50 m²/g, le traitement de surface étant une hydrophobation et la teneur en carbone de la charge (D) étant ainsi d'au moins 0,01 à au plus 20 % en poids,
(E) au moins un catalyseur d'hydrosilylation,
les quantités étant toujours choisies de telle sorte qu'elles soient au total de 100 % en poids.

2. Utilisation de la composition de silicone selon la revendication 1 pour la fabrication de films de silicone ayant une épaisseur de film de 0,1 à 500 µm.

3. Procédé continu pour la fabrication de films de silicone minces ayant une épaisseur de film de 0,1 à 500 µm, et une précision d'épaisseur de ± 5 % mesurée sur une surface de 200 cm²,
**caractérisé en ce que**
i) la composition de silicone contenant un solvant ou sans solvant selon la revendication 1 est appliquée au travers de l'espace d'une buse à fente sur un support qui se déplace, puis
ii) le solvant, s'il est présent, est éliminé de la couche de silicone qui se forme sur le film support, et la couche de silicone est réticulée,
iii) après la réticulation, le film de silicone formé peut être séparé du support,
avec les conditions suivantes :
- la buse à fente à l'étape i) est à un angle compris entre 10° et 90° par rapport au support ;
- la vitesse de déplacement du support est comprise entre 0,1 et 500 m/min ;
- la viscosité dynamique mesurée selon DIN53019 à 25 °C et à un taux de cisaillement de 1 s⁻¹ de la composition de silicone est comprise entre 100 mPa·s et 1 000 Pa·s.

4. Composite multicouche, **caractérisé en ce qu'**au moins une couche du film de silicone selon la revendication 2 ou pouvant être obtenu selon la revendication 3 est contenue.

5. Utilisation du film de silicone selon la revendication 2 ou pouvant être obtenu selon la revendication 3 dans des actionneurs, des capteurs ou des générateurs.

6. Utilisation de la composition de silicone selon la revendication 1 pour la fabrication de composants résistants à des milieux.

7. Utilisation de la composition de silicone selon la revendication 1 pour la fabrication de corps moulés dans l'impression 3D par le procédé génératif de goutte à la demande (Drop On Demand, DOD).
